(19) **Europäisches Patentamt European Patent Office Office européen des brevets**

(11) **EP 4 772 268 A1**

(12) **EUROPEAN PATENT APPLICATION**

(43) Date of publication:
08.07.2026 Bulletin 2026/28

(21) Application number: 25150080.7

(22) Date of filing: 02.01.2025

(51) International Patent Classification (IPC):
*B01J 8/12* (2006.01)

(52) Cooperative Patent Classification (CPC):
**B01J 6/008; B01J 8/087; B01J 8/12; B01J 8/1836;**
B01J 2208/00061; C01B 3/28; C01B 2203/085;
C01B 2203/1619; C01B 2203/169

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
- **Pietschak, Alexander**
  **67056 Ludwigshaven am Rhein (DE)**
- **Hurtado Riviera, Andrea Cristina**
  **67056 Ludwigshaven am Rhein (DE)**
- **Zoels, Bernd**
  **67056 Ludwigshaven am Rhein (DE)**
- **Schlereth, David**
  **2040 Antwerpen (BE)**
- **Flick, Dieter**
  **67056 Ludwigshaven am Rhein (DE)**

- **Scheiff, Frederik**
  **67146 Deidesheim (DE)**
- **Kirsch, Hanna**
  **68163 Mannheim (DE)**
- **Pottbackekr, Jan Henning Felix**
  **67056 Ludwigshaven am Rhein (DE)**
- **Bode, Johannes**
  **67056 Ludwigshaven am Rhein (DE)**
- **Pasin e Matos, Laila Raquel**
  **67056 Ludwigshaven am Rhein (DE)**
- **Hafner-Opitz, Selina Gabriele**
  **67056 Ludwigshaven am Rhein (DE)**
- **Backi, Christoph Josef**
  **67056 Ludwigshaven am Rhein (DE)**
- **Kolios, Grigorios**
  **67056 Ludwigshaven am Rhein (DE)**

(74) Representative: **BASF IP Association**
**BASF SE**
**GBI - Z078**
**67056 Ludwigshafen (DE)**

(54) **TEMPERATURE CONTROL IN MOVING BED REACTORS FOR PROCESS CONTROL OPTIMIZATION**

(57) A process for obtaining a product gas from a feed gas in a moving bed reactor, the reactor having a top and a bottom and comprising between the top and the bottom an upper heat integration zone, a lower heat integration zone, and a reaction zone located between the upper and the lower heat integration zone, wherein a plurality of solid material particles and feed gas are counter-currently driven, wherein the plurality of solid material particles is introduced at the top at an inlet and passes through the reactor in the direction of gravity, wherein the process comprises a continuous measurement of the temperature at the top of the reactor and/or a continuous measurement of the temperature at the bottom of the reactor, and adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor; a moving bed reactor for carrying out said process; and a method for stabilizing the position of the reaction zone in a moving bed reactor in said process or in said reactor.

## Description

The present invention relates to a process for obtaining a product gas from a feed gas in a moving bed reactor, the reactor having a top and a bottom and comprising between the top and the bottom an upper heat integration zone, a lower heat integration zone, and a reaction zone located between the upper and the lower heat integration zone, wherein a plurality of solid material particles and feed gas are counter-currently driven, wherein the plurality of solid material particles is introduced at the top at an inlet and passes through the reactor in the direction of gravity, wherein the process comprises a continuous measurement of the temperature at the top of the reactor and/or a continuous measurement of the temperature at the bottom of the reactor, and adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor; a moving bed reactor for carrying out said process; and a method for stabilizing the position of the reaction zone in a moving bed reactor in said process or in said reactor.

Most of the energy used in industry is needed for process heating. Highly endothermic reactions are frequently at the start of the value chain in the chemical industry, for example in the cracking of mineral oil fractions, the reforming of natural gas or naphtha, the dehydrogenation of propane, the dehydroaromatization of methane to benzene, or the pyrolysis of hydrocarbons. Temperatures between 500°C and 1700°C are often required to achieve yields of industrial and economic interest.

Improving energy efficiency of chemical reactions, especially high-temperature reactions, by systematic utilization of available waste heat is an important measure to reduce the final energy demand and can contribute to a significant reduction of $CO_2$ emissions. Waste heat can be understood as unused heat flows discharged to the environment.

A systematic utilization of available waste heat is achieved by heat integration between the product streams and the reactant streams. Heat integration includes all methods to minimize the external energy demand of a system (heating/cooling) by matching heat sources and heat sinks.

US 2982622 A relates to a method for producing hydrogen and coke which comprises passing inert solid particles downwardly through an elongated reaction zone, applying an electrical voltage across at least a portion of said solids mass in said reaction zone, said voltage being sufficient to raise the temperature of said solids to 1800 to 3000' F. due to their resistance to the flow of electricity, downwardly withdrawing thus heated solids from said reaction zone, preheating a hydrocarbon feed by heat exchange with said withdrawn solids and introducing said preheated feed into and upwardly through said reaction zone in the form of an upwardly moving gas stream, said feed contacting said heated solids and being converted to light vapors including a substantial portion of hydrogen and carbon which deposits on said solids, heat exchanging hot vapors withdrawn from said reaction zone with inert solids in a heating zone, circulating at least a portion of the solids withdrawn from the reaction zone and previously heat exchanged with said feed to said heating zone, passing solids from said heating zone to said reaction zone as solids feed thereto, and recovering at least a portion of the solids withdrawn from the reaction zone as product and recovering hydrogen gas and light vapors from the upper portion of said reaction zone.

WO 2019/145279 A1 relates to a heatable packed apparatus for conducting endothermic reactions which is divisible into an upper, middle and lower apparatus section, wherein the upper and lower apparatus sections are electrically insulated from the middle apparatus section, having at least one pair of electrodes in a vertical arrangement which is connected via the pressure-bearing apparatus shell in the upper and lower apparatus sections, and having an electrically conductive solid-state packing electrically insulated from the side wall of the middle apparatus section. It is mentioned in WO 2019/145279 A1 that the apparatus offers features for the implementation of a heat-integrated mode of operation for endothermic high-temperature processes. These features are in particular (i) the countercurrent regime between a stream of solid-state particles and a gas stream, and (ii) the adjustment of the position of the heated zone within the reaction zone, which results in a heat transfer zone for reverse heat exchange between the hot product gas and the cold stream of solid-state particles at the upper end and a heat transfer zone for reverse heat exchange between the solid product stream and the cold gas feed at the lower end. According to WO 2019/145279 A1 the position of the upper heat transfer zone, i.e. the location of the point with the negative temperature gradient of the greatest magnitude in the moving bed, is affected by a side draw, which can be used to draw off a portion of the reaction gas from the reaction zone.

WO 2020/200522 A1 relates to a method for carrying out an endothermic reaction for obtaining a product gas from a feed gas, wherein a plurality of solid material particles is guided into the first heat integration zone and from there into the reaction zone, the solid material particles are heated in the reaction zone, the solid material particles are guided from the reaction zone into the second heat integration zone and are withdrawn from the second heat integration zone, the feed gas is introduced into the second heat integration zone and from there into the reaction zone, wherein the feed gas in the second heat integration zone is heated against solid material particles coming from the reaction zone, wherein the solid material particles are cooled, and wherein the feed gas is contacted with the heated solid material particles in the reaction zone, wherein heat from the heated solid material particles is transferred to the feed gas in order to heat the feed gas in the reaction zone, wherein the feed gas in the reaction zone participates as a starting product in the reaction by producing the product gas, the product gas produced is guided from the reaction zone into the first heat integration zone, wherein the solid material particles in the first heat integration zone are preheated against the product gas coming from the reaction zone, wherein the product gas is cooled, and wherein the product gas is withdrawn from the first heat integration zone.

A stable formation of the two heat integration zones is crucial for optimal operation of the reactor with steady-state reaction control, as well as for safety reasons and increased plant availability. Shifting the heat integration zones towards the reactor head or bottom can lead to increased temperatures in the head or bottom of the reactor, triggering safety shutdowns. This reduces plant availability. Shutdown of the reactor upon reaching certain maximum temperatures is necessary to prevent product leakage due to failure of sealing materials with limited temperature resistance. Shifting the heat integration zones also leads to changes in reaction conditions, which can decrease reactor performance and result in changes of the product quality.

WO 2024/119237 A1 relates to a system and methods configured to enable improved/optimized control of a hydrocarbon pyrolysis process. Hydrocarbon gas pyrolysis systems are disclosed in which there is a reactor subsystem having a reactor chamber in which a hydrocarbon gas is decomposed in presence of a conductive particulate material. The reactor subsystem is according to WO 2024/119237 A1 a fluidized bed reactor, and no systems or methods wherein solid material particles and feed gas are counter-currently driven as well as no distinct heat integration zones are described.

It is an object of the present invention to improve the operational stability of a reactor, wherein solid material particles and feed gas are counter-currently driven, having heat integration zones and/or to provide stable reaction conditions in said reactor for obtaining a product having a consistent product quality.

The object is achieved by a process for obtaining a product gas from a feed gas in a moving bed reactor, preferably an endothermic process, more preferably a pyrolysis,

the reactor having a top and a bottom and comprising between the top and the bottom an upper heat integration zone, a lower heat integration zone, and a reaction zone located between the upper and the lower heat integration zone, wherein

a plurality of solid material particles and feed gas are counter-currently driven, wherein

the plurality of solid material particles is introduced at the top at an inlet and passes through the reactor in the direction of gravity,

the feed gas is introduced at the bottom at an inlet and ascends from there into the reaction zone,

in the reaction zone, the feed gas is contacted with the solid material particles and participates as a starting product in a reaction of producing the product gas,

the product gas ascends in direction of the top of the reactor, counter-currently to the plurality of solid material particles, wherein

the plurality of solid material particles is heated by the counter-current product gas, forming the upper heat integration zone above the reaction zone, and

the feed gas is heated by the solid material particles moving towards it, forming the lower heat integration zone below the reaction zone, wherein

the product gas leaves the reactor at an outlet at the top and the plurality of solid material particles leaves the reactor at an outlet at the bottom, wherein

the plurality of solid material particles is descending from the top to the bottom of the reactor with a mass flow, the feed gas is ascending from the bottom to the reaction zone with a mass flow,

characterized in that the process comprises a continuous measurement of the temperature at the top of the reactor and/or a continuous measurement of the temperature at the bottom of the reactor, and

adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor.

The object is further achieved by a moving bed reactor (R) for carrying out a process, wherein a product gas is obtained from a feed gas, preferably an endothermic process, more preferably a pyrolysis,

the reactor having a top (T) and a bottom (B) and comprising between the top (T) and the bottom (B) an upper heat integration zone ($HIZ_u$), a lower heat integration zone ($HIZ_l$), and a reaction zone (RZ) located between the upper and the lower heat integration zone,
wherein the reactor comprises:

an inlet (IS) for introducing a plurality of solid material particles at the top and for passing the plurality of solid material particles through the reactor in the direction of gravity,
an inlet (IG) for introducing a feed gas at the bottom and for ascending of the feed gas from there into the reaction zone,
wherein
in the reaction zone, the feed gas is contacted with the solid material particles and participates as a starting product in a reaction of producing the product gas,
and the product gas ascends in direction of the top of the reactor, counter-currently to the plurality of solid material particles, wherein the plurality of solid material particles is heated by the counter-current product gas, forming the upper heat integration zone above the reaction zone, and the feed gas is heated by the solid material particles moving towards it, forming the lower heat integration zone below the reaction zone,
an outlet (LG) for leaving of the product gas at the top of the reactor, and
an outlet (LS) for leaving of the plurality of solid material particles at the bottom of the reactor,
wherein
the plurality of solid material particles is descending from the top to the bottom of the reactor with a mass flow,
the feed gas is ascending from the bottom to the reaction zone with a mass flow,
characterized in that the reactor comprises means for a continuous measurement of the temperature at the top of the reactor (CTT) and/or for a continuous measurement of the temperature at the bottom of the reactor (CTB), one or both of the aforementioned means being in connection with means for adjusting the mass flow of the plurality of solid material particles at the outlet at the bottom of the reactor and/or at the inlet at the top of the reactor and/or means for adjusting the mass flow of the feed gas at the inlet at the bottom of the reactor.

The object is further achieved by a method for stabilizing the position of the reaction zone in a moving bed reactor in the process or in the reactor according to the present invention, by:
adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor.

By the process, reactor and method according to the present invention, a stable formation of the heat integration zones is achieved, which is important for an optimal reactor operation, especially due to:

Safety reasons: too high temperatures at the top of the reactor or at the bottom of the reactor can cause product leakage.
Plant availability: safety shutdowns can be avoided.
Reaction control: improved product quality and better reactor performance.

The inventive solution for controlling the shift of the heat integration zones and the reaction zone comprises the continuous measurement of the temperature in the reactor head (at the top of the reactor) and/or the continuous measurement of the temperature in the reactor sump (at the bottom of the reactor), based on the finding that an indication of a shift in heat integration zones is a temperature change in the reactor head (at the top of the reactor) or reactor sump (at the bottom of the reactor).

The temperature at both ends of the reactor can be influenced by the mass flow of the solids as well as the mass flow of the feed gas. By the inventive controlling and adjusting one or both temperature at the top of the reactor and temperature at the bottom of the reactor, the position of the heat integration zones and of the reaction zone can be adjusted and preferably kept constant.

According to the present invention, the temperature at the top of the reactor and/or the temperature at the bottom of the reactor are continuously measured.

The top of the reactor, also called reactor head is the upper part of the reactor. "Measuring the temperature at the top of the reactor" means that the temperature is measured in the top 25% of the reactor in relation to the total height of the reactor. The bottom of the reactor, also called reactor sump is the lower part of the reactor. "Measuring the temperature at the bottom of the reactor" means that the temperature is measured in the bottom 25% of the reactor in relation to the total height of the reactor.

According to the present application the top of the reactor (also called reactor head) is understood as the top 25% of the reactor in relation to the total height of the reactor.

According to the present application the bottom of the reactor (also called reactor sump) is understood as the bottom 25% of the reactor in relation to the total height of the reactor.

The terms "plurality of solid material particles" and "solid material particles" used in the present description are interchangeable.

The temperature at the top and at the bottom of the reactor is generally measured as known in the art, e.g. by thermocouples placed either directly in the reactor bed or inside a thermowell. It is generally possible that more than one thermocouple is present in one thermowell.

Suitable thermocouples are known in the art, e.g. type K thermocouples (NiCrNi). The number of thermocouples depends on the reactor size. For example, one to 10, preferably 2 to 8 thermocouples are present. In case that more than one thermocouple is present, said thermocouples are generally distributed in different heights and/or at the same height at different positions over the cross-section of the reactor. Preferably, according to the present invention, at least one of the thermocouples is used for temperature control.

Generally, other temperature measurements are also possible, like thermal imaging cameras and fiber optic sensors. Said temperature measurements may be used in combination with thermocouples or as alternatives.

The temperature may further be determined by field temperature measurement.

Various techniques may be employed for field temperature measurement, such as:

Infrared (IR) thermal imaging and mapping using high-sensitivity IR cameras; light field colorimetric thermometry that enables simultaneous 3D position and temperature data acquisition; stitching algorithms to create full-field temperature maps from multiple measurements; resistance thermometers and thermocouples for contact temperature measurement.

"Heat integration" in the present application is understood to mean a countercurrent heat exchange between a hot stream of matter and a cold stream of matter in a process, the effect of which is that the tangible heat from the hot stream of matter is utilized to heat the cold stream of matter. This achieves a change in temperature of the streams of matter involved without transmission of heat flows beyond the process limits.

The process and the reactor of the invention offer advantageous features for the implementation of a heat-integrated mode of operation, especially for endothermic processes. These features are in particular

(i) the countercurrent regime between a stream of solid-state particles and a gas stream,

(ii) the adjustment of the position of the heated zone within the reaction zone, which results in a heat transfer zone for reverse heat exchange between the hot product gas and the cold stream of solid-state particles at the upper end and a heat transfer zone for reverse heat exchange between the solid product stream and the cold gas feed at the lower end, by means for a continuous measurement of the temperature at the top of the reactor and/or the continuous measurement of the temperature at the bottom of the reactor and means for the adjustment of the mass flow of the plurality of solid material particles at the outlet at the bottom of the reactor and/or at the inlet at the top of the reactor and/or adjusting the mass flow of the feed gas at the inlet at the bottom of the reactor depending on the temperature measured.

The efficiency of thermal integration is further improved by the minimization of heat transfer resistance between the gas and the solid-state packing by virtue of a favorable ratio of the heat capacity flow rates of the gaseous reaction media and solid reaction media in the heat transfer zones. A measure of the efficiency of the thermal integration is the efficiency of thermal integration: $\eta$ = (reaction zone temperature-gas exit temperature of the main stream) / (reaction zone temperature-solids inlet temperature).

The efficiency of thermal integration is advantageously greater than 60%, preferably greater than 65%, further preferably greater than 70%, further preferably greater than 80%, further preferably greater than 90%, especially greater than 95%. The efficiency of thermal integration is advantageously in the range from 60% to 99.5%.

The length of the heat transfer unit is determined predominantly by the parameters of (i) properties of the bulk particles such as particle size, thermal conductivity, coefficient of emission, heat capacity (ii) properties of the gas phase such as conductivity, heat capacity and (iii) operating conditions such as pressure, temperature, throughput.

The heat transfer resistance in the heat exchange between the gas and the solid-state packing in the heat transfer zones advantageously has a length of the transfer units or height-of-transfer units (HTU) of 0.01 to 5 m, preferably 0.02 to 3 m, more preferably of 0.05 to 2 m, especially of 0.1 to 1 m. The definition of HTU is adopted from http://elib.uni-stuttgart.de/bitstream/11682/2350/1/docu_FU.pdf page 74.

The heat capacity flow rate is the product of mass flow rate and specific heat capacity of a stream of matter. Advantageously, the ratio of the heat capacity flow rates between the gaseous process stream and the solid process stream is from 0.5 to 2, preferably from 0.75 to 1.5, more preferably from 0.85 to 1.2, especially from 0.9 to 1.1. The ratio of the heat capacity flow rates is adjusted via the feed streams and optionally via the side feeding or side draw removal of sub streams.

At the top of the reactor, especially at the upper edge of the solid-state packing, the difference between the exit temperature of the gaseous product stream and the feed stream of solid-state particles is advantageously from 0 K to 500 K, preferably from 0 K to 300 K, further preferably from 0 K to 200 K, especially from 0 K to 100 K. Preferably, the fluctuation in the difference between the exit temperature of the gaseous product stream and the feed stream of solid-state particles during the operating time of the reactor is 0 to 500 K, preferably 0 to 300 K, more preferably 0 to 200 K , especially from 0 K to 100 K.

At the bottom of the reactor, especially at the point where the solid product stream is drawn off from the reactor, the difference between the exit temperature of the solid product stream and the gaseous feed stream is advantageously from 0 K to 500 K, preferably from 0 K to 300 K, further preferably from 0 K to 200 K, especially from 0 K to 100 K. Preferably, the fluctuation in the difference between the exit temperature of the solid product stream and the gaseous feed stream during the operating time of the reactor is 0 to 500 K, preferably 0 to 300 K, more preferably 0 to 200 K, especially from 0 K to 100 K.

Means for the control and adjustment of the mass flow of the solid material particles at the outlet at the bottom of the reactor and/or at the inlet at the top of the reactor and/or for the control and adjustment of the mass flow of the feed gas at the inlet at the bottom of the reactor depending on the temperature measured are generally controller.

In addition to the inventive control and adjustment of the flow rates depending on the temperature measured further controllers for example suitable for modifying the feed gas composition, and/or the current for heating may be present, to regulate for example pyrolysis efficiency and/or product selectivity. Gas flow lines within the inventive reactor can include respective gas flow control and one or more sensing modules, which may include, for example, valves, temperature sensors, temperature controllers, pumps, mass flow controllers, and/or other devices to monitor and/or control the variables of gas flow rates and/or reaction temperatures. In some embodiments, the controller can also control operation of components such as pumps, valves, switches, translation devices, etc., to effect flow of fluid (e.g., single gases or gas mixtures) and/or movement of solid material particles into, within, and/or out of the system.

In the process according to the present invention, the solid material particles are preferably recirculated. That is to say, in particular, that the solid material particles withdrawn from the lower heat integration zone (possibly after an intermediate treatment of the solid material particles) are returned to the upper heat integration zone.

In the process and in the reactor of the present invention generally two heat integration zones are present, one lower heat integration zone, which is present - in the direction of flow of the solid material particles - below the reaction zone. Said lower heat integration zone may also be called second heat integration zone. One upper heat integration zone, which is present - in the direction of flow of the solid material particles - above the reaction zone. Said upper heat integration zone may also be called first heat integration zone.

According to the present invention, the following solids and/or gas flows are preferably adjusted depending on the temperature measured by the continuous measurement of the temperature at the top of the reactor and/or the continuous measurement of the temperature at the bottom of the reactor:

    i) the mass flow of the plurality of solid material particles at the outlet at the bottom of the reactor, and/or
    ii) the mass flow of the feed gas at the inlet at the bottom of the reactor.

More preferred variants are:

    i) and ii) (variant 1) and i) (variant 2).

Most preferably, only the mass flow of the plurality of solid material particles at the outlet at the bottom of the reactor is adjusted (variant 2).

An advantage of variant 2 is: The gas flow can be controlled separately, as this is not always uniform depending on the feed gas (e.g. the feed gas composition). For example, the methane content is not always uniform when natural gas is used as feed gas.

In addition to the adjustment of the temperature at the top and/or bottom of the reactor by the mass flow of the solid material particles and/or by the mass flow of the feed gas in accordance with the process of the present invention (preferably variants i) and ii)), the temperature at the top of the reactor can be adjusted by addition of solid material particles having a lower temperature than the temperature measured at the top of the reactor (i.e. a variant of an adjustment of the temperature at the top of the reactor by the mass flow of the solid material particles). In this case it is possible to decrease the temperature at the top of the reactor independent from the temperature at the bottom of the reactor. In this way, the risk of overheating can be intercepted.

This measure can smooth out temperature peaks. It is not a permanent regulation, as the fill level of the reactor generally has an upper and lower limit for stable plant operation. Suitable fill levels are known by a person skilled in the art. Within these limits, either more or less solids (solid material particles) can be added.

It should be considered that a continuous mass flow (i.e. a continuous addition or removal of gas or solids) is according to the present invention not mandatory, but that a batchwise addition or removal is generally also possible. This applies in particular to the addition of solids.

According to the process of the present invention,

the plurality of solid material particles is introduced at the top at an inlet and passes through the reactor in the direction of gravity;

the feed gas is introduced at the bottom at an inlet and ascends from there into the reaction zone;

the product gas leaves the reactor at an outlet at the top with a product gas temperature; and

the plurality of solid material particles leaves the reactor at an outlet at the bottom with a solid material particle temperature.

Temperatures of the gaseous and solid feed streams introduced into the reactor and the gaseous and solid streams leaving the reactor (exit temperatures) are mentioned above.

Suitable inlets for the plurality of solid material particles introduced at the top of the reactor are known in the art. The inlet is generally an opening for feeding solid material particles. Upstream an fluidically connected with the inlet may be a feed chamber serving as reservoir for solid material particles to be introduced. In a preferred embodiment, upstream and fluidically connected with the inlet or optionally with the feed chamber, a rotary valve or a screw conveyor and/or an L-valve, preferably a rotary valve and/or a screw conveyor, more preferably a rotary valve, is installed, allowing controlled introduction of the solid material particles into the reactor. The inlet can be further combined for example with a loop seal and/or a vibrating trough.

Suitable outlets for the plurality of solid material particles leaving the reactor at the bottom are known in the art. The outlet may be for example a chute. At the end of the outlet, generally a discharge valve is installed. Suitable discharge valves are rotary vales, screw conveyors and/or L-valves, preferably rotary vales and/or screw conveyors, more preferably rotary valves. This allows controlled removal of the solid material particles from the reactor. The outlet can be further combined for example with a loop seal and/or a vibrating trough.

Suitable inlets for introducing the feed gas at the bottom of the reactor are known in the art. Generally, gas distributors are employed. Gas distributors known in the art may be employed, whereby it should be ensured that the flow of the plurality of solid material particles is not hindered. Examples for suitable gas distributors are perforated plates (upwardly directed flow), bubble caps and nozzles (laterally directed flow), sparger (laterally or downwardly directed flow), conical distributors (laterally directed flow), and pierced sheet distributors (laterally directed flow).

Suitable outlets for withdrawing the product gas at the top of the reactor are known in the art.

The mass flow of gases can be measured using MFCs (mass flow control), differential pressure measurement (via nozzle, Venturi tube, orifice), a rotameter or ultrasonic flow meters. In addition, there are also impeller flow meters, vortex flow meters and Coriolis flow meters.

The mass flow of solids can be measured by weighing-based flow measurement devices (they directly measure the mass of the material as it flows through the flow meter). Other methods, such as the inertial-based flow measurement devices or ultrasound/microwave-based flow measurement devices, can also be used for solids. They may require additional considerations and calibration to accurately measure the mass flow, as known in the art.

In one embodiment of the present invention, the mass flow of the plurality of solid material particles leaving the reactor is adjusted by the speed of the rotary valve and/or the screw conveyor, usually at the end of the outlet (possibility ia) - this is a specific embodiment of possibility i) mentioned above). In this case, the determination of the mass flow of the plurality of solid material particles leaving the reactor can be achieved via calibration of the rotary valve and/or the screw conveyor and calculated from the rotational speed based on the calibration.

In one embodiment of the present invention, the mass flow of the plurality of solid material particles at the outlet at the bottom of the reactor is adjusted via the speed of the rotary valve and/or the screw conveyor.

Preferably, the mass flow of the plurality of solid material particles at the outlet at the bottom of the reactor and/or at the inlet at the top of the reactor and/or the mass flow of the feed gas at the inlet at the bottom of the reactor is automatically adjusted. The general principles of control engineering are known in the art and for example described in WO 2013/124627 A1.

Preferably, the process is carried out based on the following the findings:

In case that the temperature at the top is too high and/or the temperature at the bottom is too low, the mass flow of the plurality of solid material particles is increased and/or the mass flow of the feed gas is decreased.

In case that the temperature at the top is too low and/or the temperature at the bottom is too high, the mass flow of the plurality of solid material particles is decreased and/or the mass flow of the feed gas is increased.

Preferably, the mass flow of the solid material particles at the outlet at the bottom of the reactor is adjusted.

Typically, an increase of the solid mass flow at a constant gas mass flow leads to an increase in temperature in the reactor sump due to a downward shift of the two heat integration zones. A decrease in solid mass flow results in a shift of the heat integration zones towards the reactor head and a decrease of the temperature in the reactor sump. An increase in educt gas mass flow, at a constant solid mass flow, leads to a shift of the two heat integration zones towards the reactor head. A decrease has the opposite effect. The temperature in the reactor head behaves in the opposite manner to the temperature in the reactor sump. In case that the feed gas comprises a mixture of gases, e.g. inert gas and a gaseous reactant (for example in methane pyrolysis H2 or N2 as inert gas and methane as gaseous reactant), the feed gas mass flow can be adjusted via changes in inert gas mass flow and/or gaseous reactant mass flow. "Inert gas" in the meaning of the present invention is a gas which does not participate in the reaction itself.

The feed gas according to the present invention preferably comprises at least one hydrocarbon. The hydrocarbons are preferably gaseous and/or liquid hydrocarbons. Preferred hydrocarbons are selected from methane, saturated or unsaturated hydrocarbons, in particular saturated or unsaturated $C_2$ to $C_9$ hydrocarbons, and mixtures thereof. More preferred are methane, ethane, propane, butane, pentane, naphtha or mixtures thereof, further more preferred are methane, ethane, naphtha ore mixtures thereof. Most preferably, the feed gas comprises or consists of methane.

In a further preferred embodiment, the hydrocarbons preferably comprised in the feed gas comprise methane, e.g., at least 75 vol.-% of methane, preferably at least 85 vol.-% of methane based on the total amount of the hydrocarbons in the feed gas.

The feed gas is for example natural gas, biogas, e.g. biomethane, synthetic methane, industrial off gas e.g. comprising methane, e.g. cracker off gas, sewage gas comprising methane, or mixtures thereof, even more preferably natural gas comprising methane and/or biogas, like biomethane is used as feed gas.

Typical feedstocks for cracking processes are gaseous and/or liquid hydrocarbons like ethane, propane, naphtha, bionaphtha and mixtures thereof.

The feed gas may additionally comprise hydrogen ($H_2$-feed), preferably, the feed gas comprises of 5 to 98 vol%, more preferably 10 to 95 vol%, most preferably 20 to 95 vol% hydrogen and 2 to 95 vol%, preferably 5 to 90 vol%, most preferably 5 to 80 vol% hydrocarbons based the total volume of the feed gas.

The solid material particles preferably having a mass flux at the outlet of the solid material particles at the bottom of the reactor of 0.02 to 20 kg/(sm$^2$), more preferably 0.05 to 10 kg/(sm$^2$), most preferably 0.1 to 5 kg/(sm$^2$).

The feed gas preferably having a mass flux at the inlet at the bottom of the reactor of 0.005 to 1 kg/(sm$^2$), more preferably 0.01 to 0.5 kg/(sm$^2$), most preferably 0.02 to 0.2 kg/(sm$^2$).

The product gas preferably having a mass flux at the outlet at the top of the reactor of 0.001 to 0.3 kg/(sm$^2$), more preferably 0.005 to 0.2 kg/(sm$^2$), most preferably 0.01 to 0.1 kg/(sm$^2$).

A flux of a quantity is defined as the amount of that quantity that is transported per unit time across a unit area that is perpendicular to the direction of transport. Thus, mass flux is defined as the amount of mass transported per unit time across a unit area that is perpendicular to the direction of mass transport.

The mass flux can for example be determined by measuring the mass flow (also: mass flow rate) and dividing it by the area through which the mass is flowing. Mathematically, this is expressed as:

$$j_{m=}\frac{I_m}{A}$$

$j_m$ is the mass flux,
$I_m$ is the mass flow rate (mass per unit time),
$A$ is the area through which the mass flows.

For example, in a reactor with a cross-sectional area $A$ and a fluid with mass flow rate $I_m$ passing through it, the mass flux $j_m$ can be calculated by dividing the mass flow rate by the cross-sectional area of the reactor.

The mass flow (or mass flow rate) is the measure of the movement of a mass per unit of time. This mass is represented by the number of molecules in a substance. The mass of a gas does not change with changes in temperature and pressure, the weight remains the same. The mass throughput can be expressed by kg/s.

The mass flow (or mass flow rate) of the solid material particles and of the feed gas and the product gas is in each case determined by processes known in the art, usually with a mass flow meter.

The mass flow of the gases and the solids can be measured by the methods mentioned above.

The feed gas leaving the reactor, generally having a temperature of 10 to 400°C, preferably 15 to 250°C.

The plurality of solid material particles is introduced into the reactor, generally having a temperature of 10 to 400°C, preferably 15 to 250°C.

The feed gas entering the reactor, generally having a temperature of 10 to 400°C, preferably 15 to 250°C.

The plurality of solid material particles leaving the reactor, generally having a temperature of 10 to 400°C, preferably 15 to 250°C.

The temperature at the top of the reactor is generally 10 to 2000°C, preferably 15 to 1600°C, more preferably 30 to 1500°C.

The temperature at the bottom of the reactor is generally 10 to 2000°C, preferably 15 to 1600°C, more preferably 30 to 1500°C.

The reaction according to the present invention can either be exothermic or endothermic. In the case of endothermic reactions, the supply of heat is required. The method of supplying heat is not particularly restricted and different concepts can be used. The heat source can for example be combustion heating or electric heating.

Preferably, the heating means envisaged in the present invention are electrical heating means. Preferably, the reactor is therefore electrically heated.

The use of electric energy as a heat source instead of for example heating by combustion of natural gas allows considerable advantages, in particular regarding the ease of control. The use of electricity offers opportunities for the use of compact, modular, high performance and energy efficient reactors. When the electricity derives from a non-fossil resource, the endothermic unit operation can be implemented without net emission of carbon dioxide. The heating energy can be generated directly in the bed or in separate heating elements.

In one preferred embodiment, the electric current concurrently provides electric resistance heating to the unit operation (electric resistance heating). This means the electric current passed through the electrically conductive bed generates thermal energy.

In another embodiment, heat can be provided by inductive heating.

In another embodiment, heat can be provided to the unit operation by preheating a fluid that is designed to flow through the bed, e.g., a gaseous reactant stream.

The different concepts of supplying heat may be combined. For example, the thermal energy generated by passing the current through the electrically conductive bed may be supplemented by other heat sources.

In the preferred electric resistance heating, a voltage is applied across at least a portion of the bed to induce an electric current flowing through the bed. The electrical power is generally supplied through a plurality of electrodes (two or more) that are in an electrically conductive relationship with the bed, e.g., immersed in the particle bed or electrically connected to the regular structure.

The electrodes may be made of a metal, graphite or any other suitably conductive material. Various composite refractory materials, for example containing graphite or metal, may be employed.

Preferably, a pair of axially spaced electrodes is employed, i.e., upper and lower electrodes. Alternatively, a radial electrode arrangement may be contemplated with a central electrode extending along the axis of the reactor and a generally cylindric counter electrode or a pair of concentric cylindrical electrodes with a cylindrical inner electrode and a cylindrical outer electrode so that an electric current is induced to flow through the bed in a radial direction between electrodes.

The shape of the electrodes is not particularly limited. Preferably, the electrodes are designed to achieve a uniform current distribution within the particle bed. Preferably, the electrodes take the shape of a grid or of rods. Suitable electrode assemblies are described in WO 2019/145279 A1.

When rods are used, each electrode preferably comprises a number of rods distributed across the cross section of the particle bed. Electrode rods that run to a point are particularly advantageous. Preferably, the upper and lower electrode rods run to a point on the side toward the heated zone. The tip may be conical or wedge-shaped. Correspondingly, the end of the rod may take the form of a dot or a line. The rod electrodes are generally connected to the hood in an electrically conductive manner and are generally jointly supplied with electrical power via the hood. Preferably, the electrodes take the form of a grid. For grid form, various configuration variants are conceivable, for example grids in honeycomb form composed of advantageously regular polygons, rectangular grids formed from parallel bars, grids in the form of spokes or grids composed of concentric rings. Particular preference is given to grids in the form of spokes and grids composed of concentric rings.

The potential or voltage may arise from an A.C. or D.C. source. Advantageously, a potential difference (voltage) of 1 volt to 10 000 volts, preferably of 10 volts to 5000 volts, more preferably of 50 volts to 1000 volts, is applied. The electrical field strength between the hoods is advantageously in the range of 1 V/m to 100 000 V/m, preferably 10 V/m to 10 000 V/m, more preferably 20 V/m to 5000 V/m, especially 30 V/m to 1000 V/m.

The specific electrical conductivity of the bed is advantageously from 0.001 S/cm to 60 MS/m, preferably from 1 MS/m to 50 MS/m (e.g. metallic catalysator) and from 0.01 S/cm to 300 S/cm, especially from 0.1 S/cm to 100 S/cm (carbon bed).

This advantageously results in an electric current density in the bed of 0.01 A/cm$^2$ to 100 A/cm$^2$ and higher, preferably from 0.05 A/cm$^2$ to 50 A/cm$^2$, especially from 0.1 A/cm$^2$ to 10 A/cm$^2$.

The kind of the solid material particles depends on the reaction carried out according to the present invention as well as on the heat source used.

The solid material particles may be one single type of particles or a mixture of two or more different types of particles. The particles may for example differ in form, size and/or chemical composition. Generally, the solid material particles form a particle bed in the process and in the reactor according to the present invention.

The solid material particles can either be porous or non-porous and may be in the form of powders, granular materials, pelletized materials and other forms of particulate matter like e.g. powder-like material or fines.

The solid material particles may be spherical particles, non-spherical particles or mixtures thereof.

Furthermore, the particle size of the solid material particles can be selected depending on the reactor requirement. The particle size is preferably from 0.3 to 20 mm, more preferably from 0.5 to 15 mm, most preferably from 1 to 10 mm. For example, rapid heating is advantageous, in which particle sizes are generally in the range of at most 5 mm for efficient direct heat transfer between the gas phase and the solid phase. Low heating times of for example 0.1s to 1s are thus possible.

Furthermore, a monomodal particle size distribution of the solid material particles also proves to be advantageous and is therefore preferred, since this leads to homogeneous heating and approximately to a plug flow, without demixing by partial fluidization.

In one embodiment, the solid material particles contain chemically active particles. Chemically active particles include catalytically active particles, reactants of a chemical conversion or carriers for deposition of products of the chemical conversion. Catalytically active particles exert a catalytic activity on the chemical conversion. The chemically active particles may be reactants in the reaction according to the present invention.

In another embodiment, the solid material particles are selected from adsorbents and absorbents, such as superabsorbent polymers, comprising varying degrees of moisture.

According to the invention, in the preferred electric resistance heating, the solid material particles forming the moving bed preferably are electrically conductive, such that an electric current can flow through the bed. When the bed is a regular structure, it can be intrinsically electrically conductive, or be coated with an electrically conductive coating.

In a particle bed, the particles comprise electrically conductive particles through which an electric current flows. The particle bed must contain a sufficient proportion of electrically conductive particles to ensure macroscopic electrical conductivity of the particle bed and allow for the passage of an electrical current through the bed. The proportion of electrically conductive particles in the particle bed can be in the range between 5% and 100%, preferably between 20% and 100 %, most preferably between 50 and 100% by volume, based on the total volume of the plurality of solid material particles. In any event, the conductivity, and the nature of the conductive particles constituting the particle bed, will depend largely on the reaction being carried out.

Electrically conductive particles may be of a material which is inherently conductive or of a material which may be rendered conductive by the reactive deposition of an electrically conducting material, e.g., carbon, or by the adsorption or absorption of a polar liquid such as water.

The electrically conductive particles themselves may be chemically active or may be essentially catalytically inert. The electrically conductive particles may be admixed with non-conductive particles. The non-conductive particles may be chemically active particles.

Suitably, the plurality of solid material particles are electrically conductive particles and are preferably selected from carbonaceous material, one or more metals, ceramic, silicon carbide particles, and mixtures thereof, preferably carbonaceous material.

Preferred carbonaceous material is a macro-structured carbonaceous material, more preferably a macro-structured carbonaceous material having a porosity in the range of 30 to 70 vol%, based on the total volume of the carbonaceous material, most preferably having a carbon content of 98 wt% to 100 wt%, based on the total mass of solid carbonaceous material.

Suitable carbonaceous material may include particles of char or coke, in particular graphite particles. Suitable metals (metal particles), may be metallic throughout or have a metallic coating over a non-metallic core. Metallic particles include conductive prereduced oxidic particles. Ceramic particles include for example $Al_2O_3$.

The reaction according to the present invention may be selected from chemical conversions such as dehydrations and dehydrogenations, and physical transformations such as drying operations. Reactors in which physical transformations are performed may also referred to as vessels. The terms "vessel" and "reactor" are thus used interchangeably herein without, however, necessarily implying a limitation to chemical conversions.

The present invention may be applied to a wide variety of reactions/processes. The reaction may simply involve the decomposition of a reactant, but may also involve other reactants, in particular other gaseous reactants or solid reactants such as particles constituting the particle bed.

In preferred embodiments, the reaction is selected from

(i) Hydrocarbon pyrolysis, especially methane pyrolysis according to the idealized equation

$$CH_4 \rightarrow C + 2\,H_2$$

over a bed of carbon particles;
(ii) Cracking of hydrocarbons according to the idealized equation

$$C_{(n+m)}H_{(2n+2m+2)} \rightarrow C_nH_{(2n)} + C_mH_{(2m)} + H_2$$

over a bed of carbon;

(iii) reforming of ammonia according to the idealized equation

$$2\ NH_3 \rightarrow N_2 + 3H_2$$

over a bed of particles of transition metal (such as Fe or Ni) supported on a refractory support material;

(iv) decomposition of methanol according to the idealized equation

$$CH_3OH \rightarrow CO + 2\ H_2$$

over a bed of Cu catalyst;

(v) reforming of methanol according to the idealized equation

$$CH_3OH + H_2O \rightarrow CO_2 + 3\ H_2$$

over a bed of Cu catalyst;

(vi) Reverse Water Gas Shift Reaction according to the idealized equation

$$CO_2 + H_2\ 4\ CO + H_2O$$

over a bed of Ni catalyst;

(vii) Methane Steam Reforming according to the idealized equation

$$CH_4 + H_2O \rightarrow CO + 3\ H_2$$

over a bed of SiC, C, Ni catalyst or Fe catalyst;

(viii) Methane Dry Reforming according to the idealized equation

$$CH_4 + CO_2 \rightarrow 2\ CO + 2\ H_2$$

over a bed of SiC, C, Ni catalyst or Fe catalyst;

(ix) formation of hydrocyanic acid by the reaction of ammonia with hydrocarbons according to the idealized equation

$$CH_4 + NH_3 \rightarrow HCN + 3\ H_2$$

over a bed of carbon particles;

(x) formation of hydrocyanic acid by formamide cleavage according to the idealized equation

$$HCONH_2 \rightarrow HCN + H_2O$$

over a bed of stain less particles or Fe catalyst;

(xi) Boudouard reaction according to the idealized equation

$$CO_2 + C \rightarrow 2\ CO$$

over a bed of carbon particles;

(xii) dehydroaromatization of methane according to the idealized equation

$$6\ CH_4 \rightarrow C_6H_6 + 9\ H_2$$

over a bed of Mo catalyst, optionally a mixed bed of Mo catalyst and carbon particles;

(xiii) alkane dehydrogenation according to the idealized equation

$$C_nH_{(2n+2)}\ 4\ C_nH_{(2n)} + H_2,\ \text{wherein } n = 2,3,4$$

over a bed of FeO/Pt catalyst, optionally over a mixed bed of FeO/Pt catalyst and carbon particles;

(xiv) styrene synthesis according to the idealized equation

$$C_8H_{10} \rightarrow C_8H_8 + H_2$$

over a bed of FeO/Pt catalyst, optionally over a mixed bed of FeO/Pt catalyst and carbon particles;

(xv) formation of anhydrous formaldehyde according to the idealized equation

$$CH_3OH \rightarrow CH_2O + H_2$$

over a bed of Ag catalyst;

(xvi) cyclohexane dehydrogenation according to the idealized equation

$$C_6H_{12} \rightarrow C_6H_6 + 3 H_2$$

over a bed of Pt catalyst;

(xvii) alcohol dehydration according to the idealized equation

$$C_nH_{(2n+1)}OH \rightarrow C_nH_{(2n)} + H_2O, \text{ wherein } n = 2,3,4$$

over a bed of zeolith catalyst, optionally including carbon particles;

(xviii) vinyl formamide synthesis from cyanoethyl formamide according to the idealized equation $CH_3CH(CN)(NH-COH) \rightarrow CH_2CH(NH-COH) + HCN$
over a mixed bed of potassium hydroxide on alumina and carbon particles, or carbonized catalyst of potassium hydroxide on alumina;

(xix) melamine synthesis according to the idealized equation

$$6 (NH_2)_2CO \rightarrow C_3N_6H_6 + 6 NH_3 + 3 CO_2$$

over a mixed bed of bauxite and carbon particles, or carbonized bauxite;

(xx) oxidation of sulfur dioxide to sulfur trioxide as first step in the production of sulfuric acid, according to equation $2SO_2 + O_2\ 4\ 2SO_3$
over a bed of vanadium(V) oxide catalyst;

(xxi) calcination of catalysts by decomposition of, e.g., nitrates, carbonates and hydroxides;

(xxii) drying of granulates in agricultural, wood and food industries; in paper, animal feed and pellet production; or in cement and recycling industry;

(xxiii) regeneration of adsorbents, e.g., activated carbon; and

(xxiv) regeneration of carbonized catalysts, e.g., desulfurization catalysts like Mo-Co on gamma-alumina, MTO catalysts and styrene catalysts;

(xxv) graphitization of coke or carbonaceous precursors;

(xxvi) Gasification of solid feedstocks (coal, heavy residues), also known as coking

$$C_xH_y + H_2O \rightarrow (x-y)C_{(s)} + zCO + (z+y/2)H_2$$

in a bed of coke particles.

Preferably, the reaction is selected from (i) and (ii).

According to the present invention, the temperature in the reaction zone is generally 250 to 2000°C, preferably 500 to 1600°C, more preferably 750 to 1500°C. The pressure in the reactor is generally 1 to 100 bar, preferably 1 to 50 bar.

The gaseous residence time within the reaction zone is 0.1 to 600 s, preferably 1 to 60 s.

A particularly preferred embodiment of the invention relates to a hydrocarbon pyrolysis process. Suitable and preferred hydrocarbons are mentioned above. Hydrocarbon pyrolysis is a technology that splits hydrocarbons, especially aliphatic hydrocarbons such as methane, ethane, propane and/or butane directly into hydrogen and solid carbon. Most often, natural gas comprising methane is used as feedstock for methane pyrolysis. For methane, the pyrolysis proceeds according to the following main reaction:

$$CH_4 \rightarrow C + 2 H_2$$

The process is moderately endothermic (standard reaction enthalpy: 74.91 kJ/mol of $CH_4$). It is evident from the reaction equation above that in hydrocarbon pyrolysis, the release of greenhouse gases is prevented. Therefore, in the event that the electric energy originates from renewable resources, hydrocarbon pyrolysis is a $CO_2$-free, i.e., clean technology to obtain emission-free hydrogen. It is also possible to use a non-fossil hydrocarbon feedstock like biomethane. Hydrocarbon pyrolysis is a one-step process which produces hydrogen in high volume.

As the energy demand of the hydrocarbon pyrolysis contributes to the energy-penalty of the carbon fixture, a hydrocarbon pyrolysis process having an as high as possible energy efficiency is preferred. Moving carbon bed hydrocarbon pyrolysis is preferred due to several aspects, such as higher hydrogen yields.

The obtained solid carbon can be sold as a commercial product for selected applications, depending on the carbon morphology and physical/chemical properties. For example, the solid carbon from hydrocarbon pyrolysis may be used for aluminum and steel production, tire manufacturing, electrode manufacturing, polymer blending, additive for construction materials, carbon devices like heat exchangers, soil conditioning, or storage.

Carbon particles act as the electrically conductive particles and as substrate for the deposition of carbon generated by the decomposition of the hydrocarbon compounds. The carbon particles can either be porous or non-porous and can be a granular or powder-like material. The particle size is preferably from 0.3 to 20 mm, more preferably from 0.5 to 15 mm, most preferably from 1 to 10 mm.

Suitable reaction temperatures and pressures are mentioned above. The pyrolysis is preferably carried out at temperatures from 250 to 2000°C, more preferably 500 to 1600°C, most preferably 750 to 1500°C.. The pressure is preferably from 1 to 100 bar, more preferably from 1 to 50 bar.

A preferred pyrolysis method comprises the steps of:

α) pyrolysis of hydrocarbons over a moving bed of a plurality of solid material particles, preferably carbonaceous particles, more preferably carbon particles, whereby carbon is deposited on the surface of the particles;

β) recovering a stream of hydrogen-containing gas;

γ) directing the stream of hydrogen-containing gas to a gas separation unit to obtain pure hydrogen and hydrogen-depleted gas;

δ) preferably recirculating the hydrogen-depleted gas to the reactor;

ε) withdrawing particles, wherein carbon is deposited on the surface of the particles, preferably carbon particles at the bottom of the reactor; and optionally

ζ) classifying the withdrawn particles, preferably carbon particles, preferably via sieving;

η) discharging a fraction of withdrawn particles, preferably carbon particles as a product;

θ) recirculating a fraction of withdrawn particles, preferably carbon particles directly to the reactor, and optionally

i) treating and activating a fraction of withdrawn particles, preferably carbon particles and recirculating the treated fraction to the reactor.

The inventive process is characterized in that the process comprises a continuous measurement of the temperature at the top of the reactor and/or a continuous measurement of the temperature at the bottom of the reactor, and adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor.

A stream of a hydrocarbon feedstock enters the reactor where it is thermocatalytically decomposed (pyrolyzed) over the moving bed of the plurality of solid material particles, preferably carbonaceous particles, more preferably carbon particles.

According to a preferred hydrocarbon pyrolysis process of the present invention, a plurality of solid material particles, preferably carbonaceous particles, more preferably carbon particles are fed to the reactor at the top of the particle bed, and slide downwardly under gravitational field as a continuous column. The particles, wherein carbon is deposited on the surface of the particles, preferably carbon particles are withdrawn at the bottom of the reactor. Subsequently, the withdrawn particles may be classified, i.e., sorted by their particle size, into fractions. A (coarse) fraction of the withdrawn particles is discharged as a product. A (middle-sized) fraction of the withdrawn particles is fed directly back into the inlet. A (fine) fraction of the withdrawn particles may be treated, e.g., ground into fine powder in a grinder and sieved, activated and/or formulated and recirculated to the reactor.

The gaseous residence time within the reaction zone is 0.1 to 600 s, preferably 1 to 60 s.

A hydrogen-containing gas is withdrawn from the reactor.

Preferably, according to the present invention, the product gas comprises hydrogen ($H_2$-product), preferably 10 to 100 vol%, more preferably 15 to 85 vol% hydrogen ($H_2$-product) based on the total volume of the product gas.

The hydrogen-containing raw product gas may pass a gas-solid separation unit. A filter, a cyclone, or any other system capable of separating fine particles from a gas stream, may be employed as the gas-solid separation unit. The purified gas stream is optionally directed through a heat exchanger and further to a gas separation unit. A gas separation membrane, a pressure swing adsorption (PSA) system, a cryogenic absorption (or adsorption) unit, or any other system capable of separating hydrogen from hydrocarbons, may be employed as the gas separation unit. A stream of pure hydrogen is separated from the gaseous stream.

A hydrogen-depleted gas is preferably recirculated to the reactor.

The present invention further relates to a moving bed reactor (R) for carrying out a process wherein a product gas is obtained from a feed gas, preferably an endothermic process, more preferably a pyrolysis, most preferably the process according to the present invention,

the reactor having a top (T) and a bottom (B) and comprising between the top (T) and the bottom (B) an upper heat integration zone ($HIZ_u$), a lower heat integration zone ($HIZ_l$), and a reaction zone (RZ) located between the upper and the lower heat integration zone,
wherein the reactor comprises:

an inlet (IS) for introducing a plurality of solid material particles at the top and for passing the plurality of solid material particles through the reactor in the direction of gravity,
an inlet (IG) for introducing a feed gas at the bottom and for ascending of the feed gas from there into the reaction zone,
wherein
in the reaction zone, the feed gas is contacted with the solid material particles and participates as a starting product in a reaction of producing the product gas,
and the product gas ascends in direction of the top of the reactor, counter-currently to the plurality of solid material particles, wherein the plurality of solid material particles is heated by the counter-current product gas, forming the upper heat integration zone above the reaction zone, and the feed gas is heated by the solid material particles moving towards it, forming the lower heat integration zone below the reaction zone,
an outlet (LG) for leaving of the product gas at the top of the reactor, and
an outlet (LS) for leaving the plurality of solid material particles at the bottom of the reactor,
wherein
the plurality of solid material particles is descending from the top to the bottom of the reactor with a mass flow, and the feed gas is ascending from the bottom to the reaction zone with a mass flow,
characterized in that the reactor comprises means for a continuous measurement of the temperature at the top of the reactor (CTT) and/or for a continuous measurement of the temperature at the bottom of the reactor (CTB), one or both of the aforementioned means being in connection with means for adjusting the mass flow of the plurality of solid material particles at the outlet at the bottom of the reactor and/or at the inlet at the top of the reactor and/or means for adjusting the mass flow of the feed gas at the inlet at the bottom of the reactor.

Preferably, the reactor is electrically heated.

Suitable and preferred features of the reactor are described above regarding the process according to the present invention. The above-described features also apply to the reactor according to the invention.

Preferably, the inventive process is carried out in the reactor according to the present invention.

Preferably, the reactor is configured to provide a reactor bed comprising a plurality of solid material particles, wherein the reactor is furthermore configured to guide a feed gas into the reactor. The reactor comprises a first (upper) heat integration zone in which heat from the product gas produced in a reaction zone can be transferred to the plurality of solid material particles of the reactor bed to be guided into the reaction zone, and wherein the reactor also comprises a second (lower) heat integration zone in which heat from the plurality of solid material particles of the reactor bed coming from the reaction zone can be transferred to the feed gas in order to preheat the feed gas. The reaction zone is present between the first and the second heat integration zones. In the reaction zone, the feed gas is contacted with the plurality of solid material particles of the reactor bed and generally participates as a starting product in the reaction of producing a product gas.

The plurality of solid material particles is driven by gravity and the feed gas forms a counterflow gas flow so that preferably almost complete heat integration can be achieved.

Preferably, a direct electrical heating of the solid material particles is used. For example, permeable electrodes, in particular in the form of grids, can be used for this purpose, wherein an electrical voltage is applied to the electrodes and thus the resistance of the solid material particles is used for heat production/heat dissipation.

Preferably, the reaction zone is arranged in the vertical direction between two electrodes when the reactor is arranged as mentioned above, wherein the first heat integration zone is arranged above the first electrode, and wherein the second heat integration zone is arranged below the second electrode.

In order to introduce the solid material particles forming the respective reactor bed, it is furthermore provided that the respective reactor comprises a solid material particle inlet via which solid material particles can be introduced at the top of the reactor so that the solid material particles can be guided past the first electrode into the reaction zone and also guided past the second electrode to the bottom of the reactor. Suitable means for adding the solid material particles are mentioned above.

In order to withdraw the solid material particles (and in particular to recirculate the solid material particles to the solid material particle inlet), the reactor also comprises a solid material particle outlet via which the solid material particles can be withdrawn from the bottom of the reactor. Suitable means for withdrawing the solid material particles are mentioned above. The withdrawn solid material particles are for example classified, preferably via sieving.

Preferably, in the preferred pyrolysis (especially preferred methane pyrolysis), the solid material particles are carbonaceous particles. Further preferred solid material particles are mentioned above.

A fraction of the withdrawn solid material particles, preferably the withdrawn carbonaceous particles, is preferably discharged as a product, after an optional classifying step.

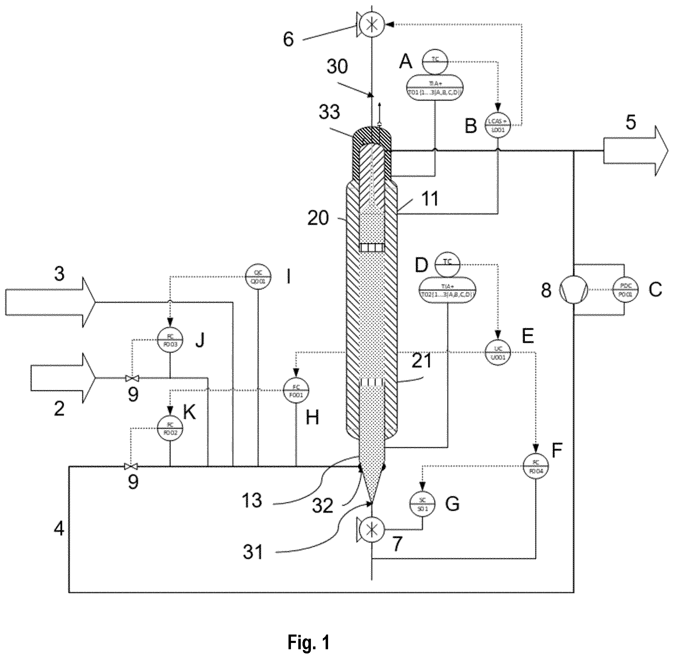

Another fraction of the withdrawn solid material particles, preferably the withdrawn carbonaceous particles, is preferably recirculated directly to the reactor, as for example shown in Fig. 1 to 4 of the present application, and, optionally, a further fraction of the withdrawn solid material particles, preferably the withdrawn carbonaceous particles are treated, e.g. sieved and/or activated, and the treated fraction is recirculated to the reactor.

Preferably, in the preferred pyrolysis (especially preferred methane pyrolysis), the product gas is a hydrogen-containing gas.

The product gas may comprise beside the desired gas or gas mixture, e.g. hydrogen in the methane pyrolysis, further gaseous components like non reacted feed gas.

The product gas, preferably the hydrogen-containing gas, is therefore preferably directed to a gas separation unit to obtain the pure desired gas or gas mixture and further gaseous components, e.g. pure hydrogen and a hydrogen-depleted gas.

The further gaseous components, e.g. the hydrogen-depleted gas is preferably recirculated to the reactor, as for example shown in Fig. 1 to 4 of the present application.

An example for a generally suitable reactor for carrying out the present invention is shown in Fig. 1 in WO 2020200522 A1 (configured to carry out a reaction in which a product gas is obtained from a feed gas) and the corresponding description. Said reactor in Fig. 1 in WO 2020200522 A1 does not comprise means for a continuous measurement of the temperature at the top of the reactor (CTT) and/or for a continuous measurement of the temperature at the bottom of the reactor (CTB), one or both of the aforementioned means being in connection with means for adjusting the mass flow of the solid material particles at the outlet at the bottom of the reactor and/or at the inlet at the top of the reactor and/or means for adjusting the mass flow of the feed gas at the inlet at the bottom of the reactor as claimed in the present invention.

By said means, an adjustment of the position of the heated zone within the reaction zone, which results in a heat transfer zone for reverse heat exchange between the hot product gas and the cold stream of solid-state particles at the upper end and a heat transfer zone for reverse heat exchange between the solid product stream and the cold gas feed at the lower end is achieved. Examples for said means according to the present invention are mentioned above and additionally shown in Fig. 1 to 4 of the present application.

The present invention further relates to a method for stabilizing the position of the reaction zone in a moving bed reactor in a process according to the present invention, by:
adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by a continuous measurement of the temperature at the top of the reactor and/or a continuous measurement of the temperature at the bottom of the reactor.

Suitable and preferred features of the method are described above regarding the process and the reactor according to the present invention. The above-described features also apply to the method according to the invention.

Further features and advantages of the present invention will be explained in the description of exemplary embodiments, with reference to the figures and examples.

The figures show:

Fig. 1 to 4: Schematic representations (piping and instrumentation diagrams (P&ID)) of exemplary variants of the reactor control system according to the invention

In Fig. 1 to 4, beside exemplary variants of the reactor control system according to the invention, the recirculation of a fraction of the withdrawn solid material particles, preferably the withdrawn carbonaceous particles, to the reactor and the recirculation of the further gaseous components after separation of the pure product gas, e.g. the hydrogen-depleted gas, are shown as examples.

It is clear for a person skilled in the art that not all control systems and recirculation lines are mandatory in the inventive reactor and in the inventive process. The variants in Fig. 1 to 4 are exemplary for the inventive reactor/process.

The numbers and letters in Fig. 1 to 4 have the following meanings:

2 Fresh feed gas
3 Retentate (product separation)
4 Residual gaseous components after separation of the product gas
5 Raw product
6 Rotary valve and/or the screw conveyor at the top
7 Rotary valve and/or the screw conveyor at the bottom
8 Vacuum pump
9 Valve
11 Top of the reactor
13 Bottom of the reactor
20 Electrode
21 Electrode
30 Solid material particle inlet
31 Solid material particle outlet
32 Feed gas inlet
33 Feed gas outlet
A Temperature sensor or temperature controller; Totally Integrated Automation
B Level Control and Alarm System
C Process Data Controller or Process Data Management
D Temperature sensor or temperature controller; Totally Integrated Automation
E Control Unit or Universal Controller
F Flow regulator or flow controller
G Safety Controller
H Flow regulator or flow controller
I Quality Controller
J Flow regulator or flow controller
K Flow regulator or flow controller

For symbols comprised on a circle, the top letters are the functional indicator, the bottom numbers are the measurement on control value and the following suffix indicated whether there are multiple instruments in a chain.

The functional identification consists of a first letter, designating the measured or initiating variable (examples include F-flow, P-pressure, T-temperature, L-level). In the case of FV, the first letter F stands for flow. The second (and sometimes third and fourth letters) are modifiers.

The abbreviations (functional identification) mentioned in Fig. 1 to 4 are part of the standardized notation in process engineering (DIN e.V. (Ed.) (DIN 19 2278 part 1): DIN 19 2278 part 1, "Graphische Symbole und Kennbuchstaben für die Prozeßleittechnik", Beuth-Verlag, Berlin, 1993) and have the following meanings:

TC: Temperature sensor or temperature controller
FC: Flow regulator or flow controller
UC: Control Unit or Universal Controller
SC: Safety Controller
PDC: Process Data Controller or Process Data Management
LCAS: Level Control and Alarm System
TIA: Totally Integrated Automation, a concept for the integration of all automation and control elements in one system
QC: Quality controller
Fig. 1 shows:

- A continuous temperature measurement at the bottom of the reactor;
- A control (adjustment) of the mass flow of the plurality of solid material particles at the outlet at the bottom of the reactor depending on the temperature measured by the continuous measurement of the temperature at the bottom of the reactor;
- A control (adjustment) of the mass flow of the feed gas at the inlet at the bottom of the reactor depending on the temperature measured by the continuous measurement of the temperature at the bottom of the reactor;
- A continuous temperature measurement at the top of the reactor;
- A control (adjustment) of the mass flow of the plurality of solid material particles at the inlet at the top of the reactor depending on the temperature measured by the continuous measurement of the temperature at the top of the reactor.

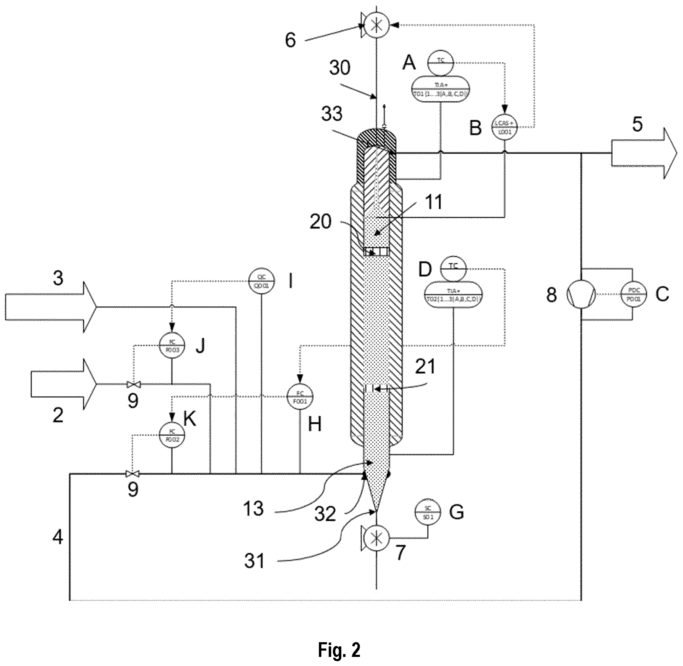

Fig. 2 shows:

- A continuous temperature measurement at the bottom of the reactor;
- A control (adjustment) of the mass flow of the feed gas at the inlet at the bottom of the reactor depending on the temperature measured by the continuous measurement of the temperature at the bottom of the reactor;
- A continuous temperature measurement at the top of the reactor;
- A control (adjustment) of the mass flow of the plurality of solid material particles at the inlet at the top of the reactor depending on the temperature measured by the continuous measurement of the temperature at the top of the reactor.

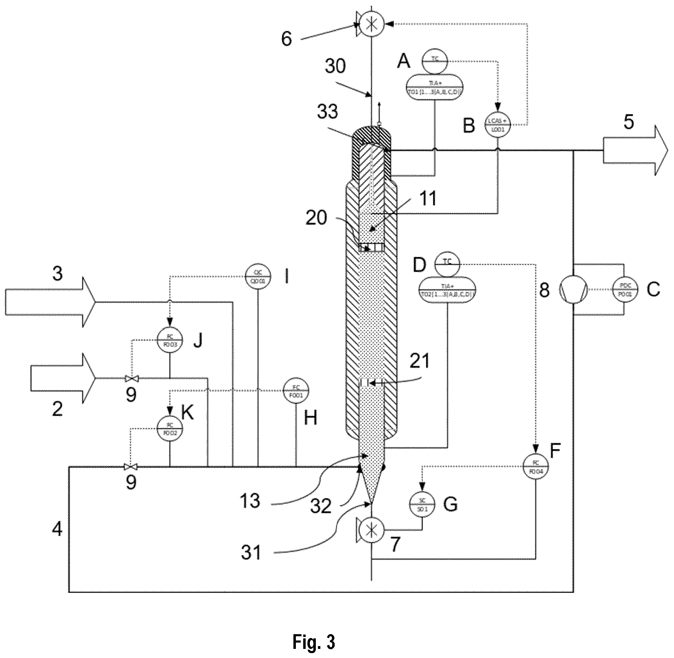

Fig. 3 shows:

- A continuous temperature measurement at the bottom of the reactor;
- A control (adjustment) of the mass flow of the plurality of solid material particles at the outlet at the bottom of the reactor depending on the temperature measured by the continuous measurement of the temperature at the bottom of the reactor;
- A continuous temperature measurement at the top of the reactor;
- A control (adjustment) of the mass flow of the plurality of solid material particles at the inlet at the top of the reactor depending on the temperature measured by the continuous measurement of the temperature at the top of the reactor.

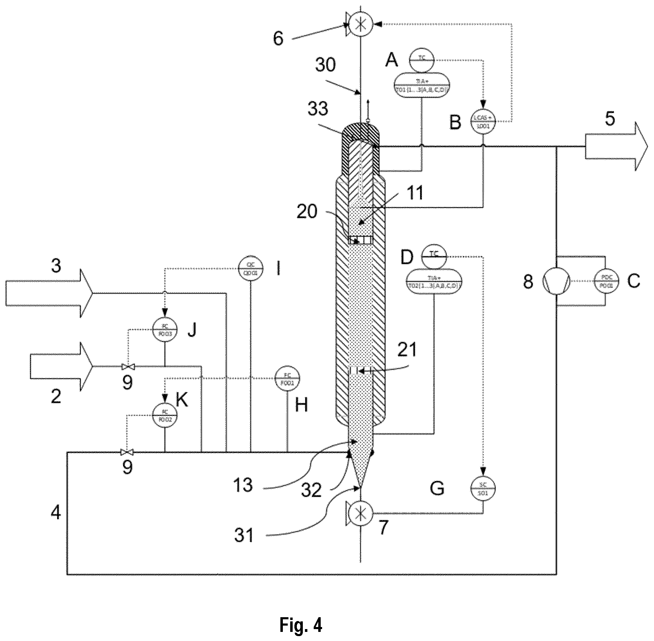

Fig. 4 shows:

- A continuous temperature measurement at the bottom of the reactor;
- A control (adjustment) of the frequency of the lower rotary valve for controlling the mass flow of the plurality of solid material particles at the outlet at the bottom of the reactor depending on the temperature measured by the continuous measurement of the temperature at the bottom of the reactor;
- A continuous temperature measurement at the top of the reactor;
- A control (adjustment) of the mass flow of the plurality of solid material particles at the inlet at the top of the reactor depending on the temperature measured by the continuous measurement of the temperature at the top of the reactor.

**Examples**

In the following in is shown that a temperature regulation by adjusting the mass flow of the plurality of solid material particles at the outlet at the bottom of the reactor and/or the mass flow of the feed gas at the inlet at the bottom of the reactor depending on the temperature measured by the continuous measurement of the temperature at the bottom of the reactor as claimed in the present invention is successful.

Examples 1 to 5: General description

Pyrolysis of natural gas to $H_2$ and solid C was carried out in a moving bed reactor. The reactor had an inner tube diameter of 190 mm and a solid bed height of 3 m. The solid bed comprised carbon granules with particle sizes from 2 - 4 mm. The particle comprised a mixture of calcinated petroleum coke (CPC) and the pyrolytic carbon, deposed on the particle from the methane pyrolysis. The bed was direct electrically heated. In addition to that the wall of the inner tube was electrically heated to compensate heat losses.

The process conditions for examples 1 to 5 are summarized in table 1.

| | | Example 1 (Fig. 5) | Example 2 (Fig. 6) | Example 3 (Fig. 7)* | Example 4 (Fig. 8) | Example 5 (Fig. 9) |
|---|---|---|---|---|---|---|
| Operating pressure p | bar(abs) | 2.4 | 2.4 | 2.4 | 2.4 | 2.4 |
| Reaction temperature T | °C | 1250 | 1250 | 1250 | 1250 | 1250 |
| y_CH$_4$_Feed | Vol% | 5.8 | 18.2 | 0 | 18.3 | 5.8 |

(continued)

| | | Example 1 (Fig. 5) | Example 2 (Fig. 6) | Example 3 (Fig. 7)* | Example 4 (Fig. 8) | Example 5 (Fig. 9) |
|---|---|---|---|---|---|---|
| F_M_Feed** | kg/h | 3.1 | 4 | 1.9 | 4.1 | 3.2 |
| * T control exclusively with $H_2$, without pyrolysis<br>**mass flow | | | | | | |

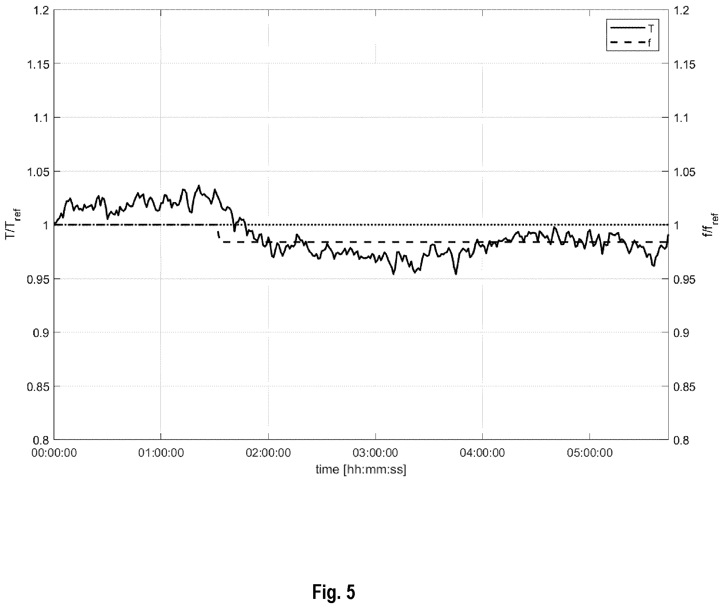

**Example 1** - **Fig. 5**

Adjustment of the temperature via mass flow of the plurality of solid material particles at the outlet at the bottom of the reactor/frequency of the rotary valve

In the graph in Fig. 5 the correlation between the temperature ($T/T_{ref}$; left y-axis) and the frequency of the rotary valve (corresponding to the mass flow of the plurality of solid material particles) ($f/f_{ref}$; right y-axis) over the time (in hh:mm:ss) (x-axis) is shown.

The straight line is the frequency of the rotary valve and the jagged line is the temperature. The dotted line is the setpoint of the frequency of the rotary valve.

The graph shows a successful temperature regulation via mass flow of the plurality of solid material particles at the outlet at the bottom of the reactor:

The temperature in the reactor sump is being decreased by decreasing mass flow of the plurality of solid material particles at the outlet at the bottom of the reactor;
The mass flow of the plurality of solid material particles at the outlet at the bottom of the reactor is being adjusted by the frequency of the rotary valve.

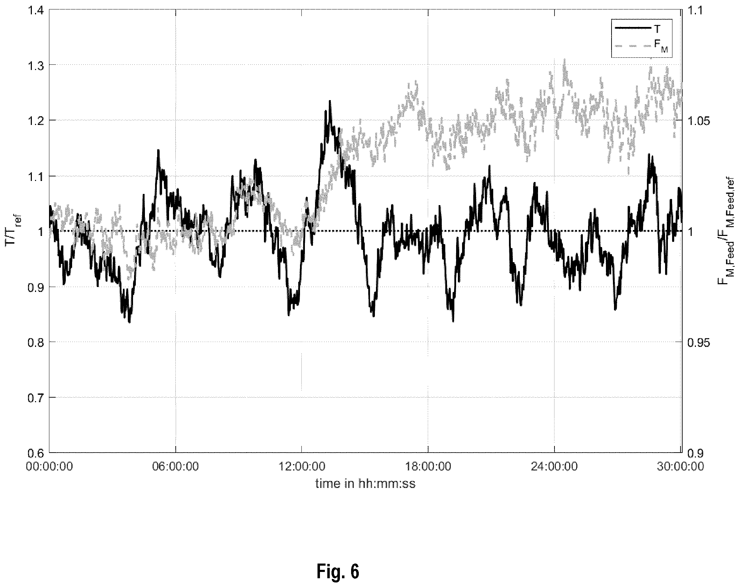

**Example 2** - **Fig. 6**

Adjustment of the temperature via mass flow of the feed gas at the inlet at the bottom of the reactor

In the graph in Fig. 6 the correlation between the temperature ($T/T_{ref}$; left y-axis) and the mass flow of the feed gas ($F_{M,Feed}/F_{M,Feed,ref}$; right y-axis) over the time (in hh:mm:ss) (x-axis) is shown. The dotted line is the temperature setpoint.

The dashed line is the mass flow of the feed gas and the jagged line is the temperature.

The graph shows a successful temperature regulation via mass flow of the feed gas at the inlet at the bottom of the reactor:
The temperature in the reactor sump is being decreased by increasing the mass flow of the feed gas and vice versa.

Said regulation allows stable operation conditions.

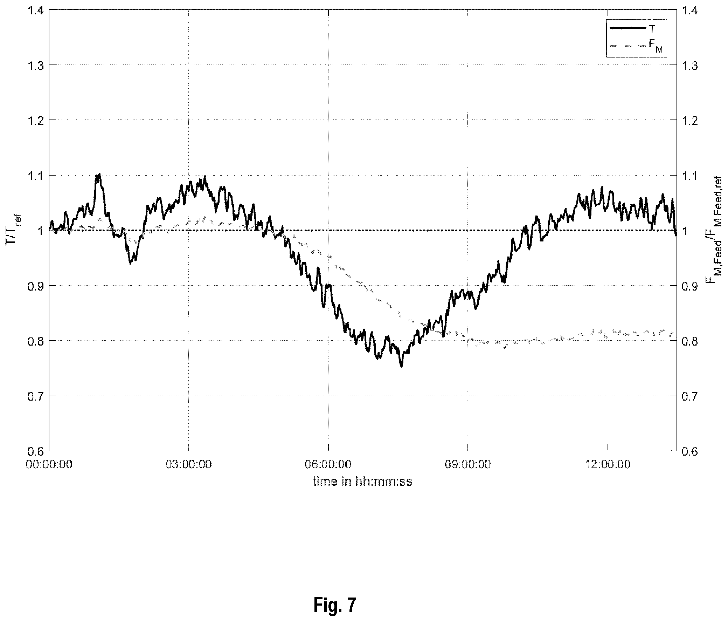

**Example 3** - **Fig. 7**

Adjustment of the temperature via mass flow of the feed gas at the inlet at the bottom of the reactor

In the graph in Fig. 7 the correlation between the temperature ($T/T_{ref}$; left y-axis) and the mass flow of the feed gas ($F_{M,Feed}/F_{M,Feed"ref}$; right y-axis) over the time (in hh:mm:ss) (x-axis) is shown. The dotted line is the temperature setpoint.

The dashed line is the mass flow of the feed gas and the jagged line is the temperature.

The graph shows a successful temperature regulation via mass flow of the feed gas at the inlet at the bottom of the reactor:
The temperature in the reactor sump decreases and is being reset to the original temperature by lowering the mass flow of the feed gas.

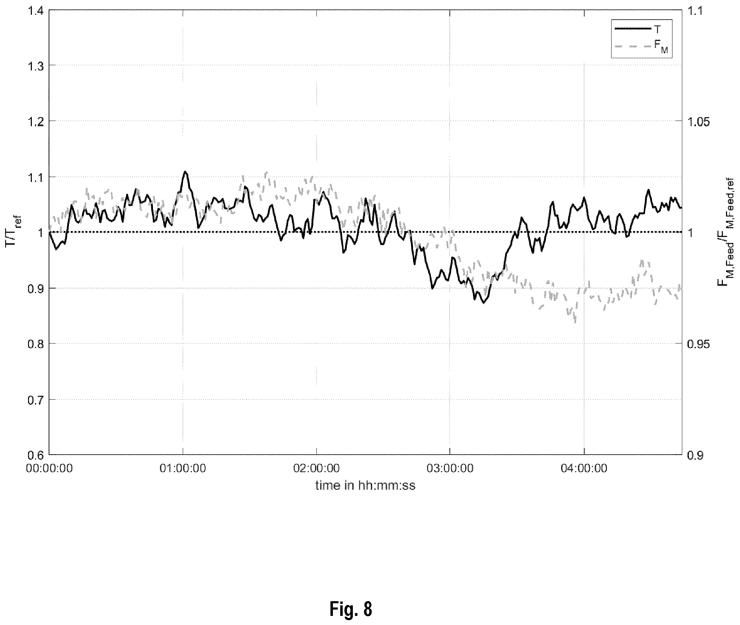

**Example 4 - Fig. 8**

Adjustment of the temperature via mass flow of the feed gas at the inlet at the bottom of the reactor

In the graph in Fig. 8 the correlation between the temperature ($T/T_{ref}$; left y-axis) and the mass flow of the feed gas ($F_{M,Feed}/F_{M,Feed,ref}$; right y-axis) over the time (in hh:mm:ss) (x-axis) is shown. The dotted line is the temperature setpoint.

The dashed line is the mass flow of the feed gas and the jagged line is the temperature.

The graph shows a successful temperature regulation via mass flow of the feed gas at the inlet at the bottom of the reactor:
The temperature in the reactor sump decreases and is being reset to the original temperature by lowering the mass flow of the feed gas.

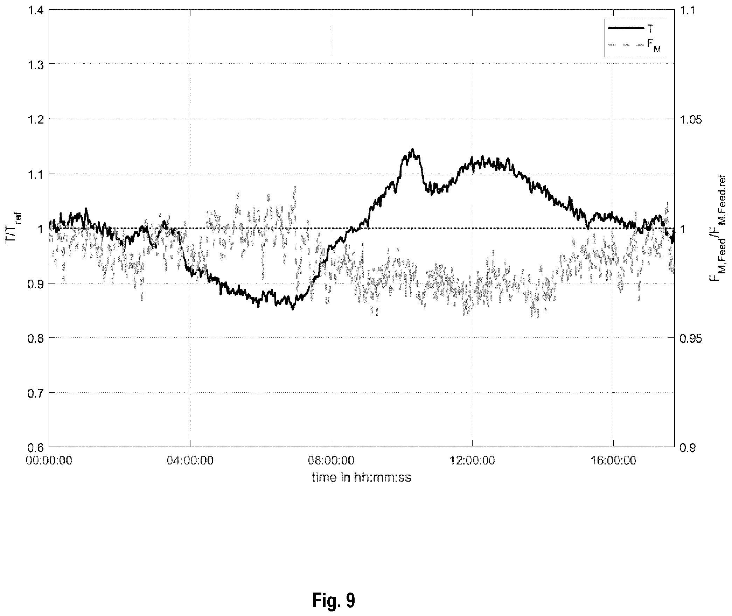

**Example 5 - Fig. 9**

Adjustment of the temperature via mass flow of the feed gas at the inlet at the bottom of the reactor - overregulation

In the graph in Fig. 9 the correlation between the temperature ($T/T_{ref}$; left y-axis) and the mass flow of the feed gas ($F_{M, Feed}/F_{M,Feed,,ref}$; right y-axis) over the time (in hh:mm:ss) (x-axis) is shown. The dotted line is the temperature setpoint.

The dashed line is the mass flow of the feed gas and the jagged line is the temperature.

When the mass flow of the feed gas is being increased, the temperature in the reactor sump decreases.

When the mass flow of the feed gas is being set back to its original value, the temperature in the reactor sump increases, swings over and reaches its original value.

In the Figures and examples the method of supplying heat is electric heating. However, according to the present invention, the method of supplying heat is not particularly restricted and different concepts - as known in the art - can be used.

**Claims**

1. A process for obtaining a product gas from a feed gas in a moving bed reactor, preferably an endothermic process, more preferably a pyrolysis,

   the reactor having a top and a bottom and comprising between the top and the bottom an upper heat integration zone, a lower heat integration zone, and a reaction zone located between the upper and the lower heat integration zone,
   wherein
   a plurality of solid material particles and feed gas are counter-currently driven,
   wherein
   the plurality of solid material particles is introduced at the top at an inlet and passes through the reactor in the direction of gravity,
   the feed gas is introduced at the bottom at an inlet and ascends from there into the reaction zone,
   in the reaction zone, the feed gas is contacted with the solid material particles and participates as a starting product in a reaction of producing the product gas,
   the product gas ascends in direction of the top of the reactor, counter-currently to the plurality of solid material particles,
   wherein
   the plurality of solid material particles is heated by the counter-current product gas, forming the upper heat integration zone above the reaction zone, and
   the feed gas is heated by the solid material particles moving towards it, forming the lower heat integration zone below the reaction zone,
   wherein
   the product gas leaves the reactor at an outlet at the top and the plurality of solid material particles leaves the reactor at an outlet at the bottom,
   wherein
   the plurality of solid material particles is descending from the top to the bottom of the reactor with a mass flow, and
   the feed gas is ascending from the bottom to the reaction zone with a mass flow,
   **characterized in that** the process comprises a continuous measurement of the temperature at the top of the reactor and/or a continuous measurement of the temperature at the bottom of the reactor, and
   adjusting the mass flow of the plurality of solid material particles at the outlet at the bottom of the reactor and/or at the inlet at the top of the reactor and/or the mass flow of the feed gas at the inlet at the bottom of the reactor depending on the temperature measured by the continuous measurement of the temperature at the top of the reactor and/or the continuous measurement of the temperature at the bottom of the reactor,
   wherein the reactor is preferably electrically heated

2. The process according to claim 1, wherein in case that the temperature at the top is too high and/or the temperature at the bottom is too low, the mass flow of the plurality of solid material particles is increased and/or the mass flow of the feed gas is decreased, preferably the mass flow of the plurality of solid material particles is increased.

3. The process according to claim 1, wherein in case that the temperature at the top is too low and/or the temperature at the bottom is too high, the mass flow of the plurality of solid material particles is decreased and/or the mass flow of the feed gas is increased, preferably the mass flow of the feed gas is increased.

4. The process according to any one of claims 1 to 3, wherein the mass flow of the solid material particles at the outlet at the bottom of the reactor is adjusted.

5. The process according to claim 4, wherein the mass flow of the solid material particles at the outlet at the bottom of the reactor is adjusted by the speed of the rotary valve and/or the screw conveyor.

6. The process according to any one of claims 1 to 5, wherein the feed gas comprises at least one hydrocarbon, preferably the feed gas comprises methane.

7. The process according to claim 6, wherein the feed gas additionally comprises hydrogen ($H_2$-feed), preferably, the feed gas comprises of 5 to 98 vol%, more preferably 10 to 95 vol%, most preferably 20 to 95 vol% hydrogen and 2 to 95 vol%, preferably 5 to 90 vol%, most preferably 5 to 80 vol% hydrocarbons based the total volume of the feed gas.

8. The process according to any one of claims 1 to 7, wherein the solid material particles having a mass flux at the outlet of the solid material particles at the bottom of the reactor of 0.02 to 20 kg/(sm$^2$), preferably 0.05 to 10 kg/(sm$^2$), more preferably 0.1 to 5 kg/(sm$^2$)and/or the feed gas having a mass flux at the outlet at the top of the reactor of 0.005 to 1 kg/(sm$^2$), more preferably 0.01 to 0.5 kg/(sm$^2$), most preferably 0.02 to 0.2 kg/(sm$^2$).

9. The process according to any one of claims 1 to 8, wherein the feed gas entering the reactor having a temperature of 10 to 400°C, preferably 15 to 250°C and/or the solid material particles leaving the reactor having a temperature of 10 to 400°C, preferably 15 to 250°C.

10. The process according to any one of claims 1 to 9, wherein the temperature at the top of the reactor is 10 to 2000°C, preferably 15 to 1600°C, more preferably 30 to 1500°C and/or the temperature at the bottom of the reactor is 10 to 2000°C, preferably 15 to 1600°C, more preferably 30 to 1500°C.

11. The process according to any one of claims 1 to 10, wherein the plurality of solid material particles is a carbonaceous material, one or more metals, ceramic, silicon carbide particles, or a mixture thereof, preferably a carbonaceous material, more preferably a macro-structured carbonaceous material, most preferably a macro-structured carbonaceous material having a porosity in the range of 30 to 70 vol%, based on the total volume of the carbonaceous material, further most preferably having a carbon content of 98 wt% to 100 wt%, based on the total mass of solid carbonaceous material.

12. The process according to any one of claims 1 to 11, wherein the product gas comprises hydrogen ($H_2$-product), preferably 10 to 100 vol%, more preferably 15 to 85 vol% hydrogen ($H_2$-product) based on the total volume of the product gas.

13. The process according to any one of claims 1 to 12, wherein the temperature in the reaction zone is 250 to 2000°C, preferably 500 to 1600°C, more preferably 750 to 1500°C, and/or wherein the pressure in the reactor is 1 to 100 bar, preferably 5 to 50 bar.

14. A moving bed reactor (R) for carrying out a process wherein a product gas is obtained from a feed gas, preferably an endothermic process, more preferably a pyrolysis, most preferably the process according to any one of claims 1 to 13,

the reactor having a top (T) and a bottom (B) and comprising between the top (T) and the bottom (B) an upper heat integration zone (HIZ$_u$), a lower heat integration zone (HIZ$_l$), and a reaction zone (RZ) located between the upper and the lower heat integration zone,
wherein the reactor comprises:

an inlet (IS) for introducing a plurality of solid material particles at the top and for passing the plurality of solid material particles through the reactor in the direction of gravity,
an inlet (IG) for introducing a feed gas at the bottom and for ascending of the feed gas from there into the reaction zone,
wherein
in the reaction zone, the feed gas is contacted with the solid material particles and participates as a starting product in a reaction of producing the product gas,

and the product gas ascends in direction of the top of the reactor, counter-currently to the plurality of solid material particles, wherein the plurality of solid material particles is heated by the counter-current product gas,

forming the upper heat integration zone above the reaction zone, and the feed gas is heated by the solid material particles moving towards it, forming the lower heat integration zone below the reaction zone,

an outlet (LG) for leaving of the product gas at the top of the reactor, and

an outlet (LS) for leaving the plurality of solid material particles at the bottom of the reactor,

wherein

the plurality of solid material particles is descending from the top to the bottom of the reactor with a mass flow, and the feed gas is ascending from the bottom to the reaction zone with a mass flow,

**characterized in that** the reactor comprises means for a continuous measurement of the temperature at the top of the reactor (CTT) and/or for a continuous measurement of the temperature at the bottom of the reactor (CTB), one or both of the aforementioned means being in connection with means for adjusting the mass flow of the plurality of solid material particles at the outlet at the bottom of the reactor and/or at the inlet at the top of the reactor and/or means for adjusting the mass flow of the feed gas at the inlet at the bottom of the reactor, wherein the reactor is preferably electrically heated.

15. A method for stabilizing the position of the reaction zone in a moving bed reactor in a process according to any one of claims 1 to 13 or in a reactor according to claim 14, by:

adjusting the mass flow of the plurality of solid material particles at the outlet at the bottom of the reactor and/or at the inlet at the top of the reactor and/or adjusting the mass flow of the feed gas at the inlet at the bottom of the reactor depending on the temperature measured by the continuous measurement of the temperature at the top of the reactor and/or the continuous measurement of the temperature at the bottom of the reactor.

Fig. 1

EP 4 772 268 A1

Fig. 2

Fig. 3

Fig. 4

Fig. 5

Fig. 6

**Fig. 7**

**Fig. 8**

**Fig. 9**

Europäisches
Patentamt
European
Patent Office
Office européen
des brevets

# EUROPEAN SEARCH REPORT

**Application Number**

EP 25 15 0080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/152568 A1 (ZANDER HANS-JÖRG [DE] ET AL) 19 May 2022 (2022-05-19) <br> * abstract * <br> * paragraph [0045] - paragraph [0050]; figure 1 * <br> * claims 1, 24 * <br> ----- | 1-15 | INV. <br> B01J8/12 |
| Y | US 4 361 538 A (DICOI OVIDIU ET AL) 30 November 1982 (1982-11-30) <br> * abstract * <br> * column 2, line 24 - line 63; figure 1 * <br> * column 4, line 4 - line 12 * <br> * claim 1 * <br> ----- | 1-15 | |

**TECHNICAL FIELDS SEARCHED (IPC)**

B01J

The present search report has been drawn up for all claims

| Place of search | Date of completion of the search | Examiner |
|---|---|---|
| Munich | 1 July 2025 | Thomasson, Philippe |

EPO FORM 1503 03.82 (P04C01)

## ANNEX TO THE EUROPEAN SEARCH REPORT
## ON EUROPEAN PATENT APPLICATION NO.

EP 25 15 0080

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| US 2022152568 | A1 | 19-05-2022 | AU 2020250684 | A1 | 28-10-2021 |
| | | | CA 3135808 | A1 | 08-10-2020 |
| | | | CN 113646255 | A | 12-11-2021 |
| | | | DE 102019002523 | A1 | 08-10-2020 |
| | | | EP 3947261 | A1 | 09-02-2022 |
| | | | EP 4424411 | A2 | 04-09-2024 |
| | | | ES 2991383 | T3 | 03-12-2024 |
| | | | JP 2022526971 | A | 27-05-2022 |
| | | | KR 20210143806 | A | 29-11-2021 |
| | | | US 2022152568 | A1 | 19-05-2022 |
| | | | WO 2020200522 | A1 | 08-10-2020 |
| US 4361538 | A | 30-11-1982 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2982622 A
- WO 2019145279 A1
- WO 2020200522 A1
- WO 2024119237 A1
- WO 2013124627 A1

**Non-patent literature cited in the description**

- Graphische Symbole und Kennbuchstaben für die Prozeßleittechnik. Beuth-Verlag, 1993